# EUROPEAN PATENT SPECIFICATION

(11) **EP 1 699 953 B1**
(45) Date of publication and mention of the grant of the patent: **20.06.2012**
(21) Application number: 04700029.4
(22) Date of filing: 01.01.2004
(51) Int. Cl.: D01F 6/04, D01D 4/02

(54) **PROCESS FOR MAKING HIGH-PERFORMANCE POLYETHYLENE MULTIFILAMENT YARN**
VERFAHREN ZUR HERSTELLUNG VON HOCHLEISTUNGSFÄHIGEM POLYETHYLEN-MULTIFILAMENTGARN
PROCEDE DE PRODUCTION D'UN FIL MULTIFILAMENT HAUTE PERFORMANCE EN POLYETHYLENE

(43) Date of publication of application: 13.09.2006
(73) Proprietor: DSM IP Assets B.V., 6411 TE Heerlen (NL)
(72) Inventor: SIMMELINK, Joseph, Arnold, Paul, Maria, NL-6137 AH Sittard (NL); MENCKE, Jacobus, Johannes, NL-6226 AV Maastricht (NL); MARISSEN, Roelof, NL-6121 HS Born (NL)
(74) Representative: Dorrestijn, Antoon
(86) International application number: PCT/NL2004/000031
(87) International publication number: WO 2005/066400

(56) References cited:
- EP-A- 0 064 167
- WO-A-01/73173
- WO-A-94/12703
- US-A- 5 068 073

## Description

The invention relates to a process for making high-performance polyethylene multifilament yarn comprising the steps of
a) making a solution of ultra-high molar mass polyethylene in a solvent;
b) spinning of the solution through a spinplate containing a plurality of spinholes into an air-gap to form fluid filaments, while applying a draw ratio DR_{fluid};
c) cooling the fluid filaments to form solvent-containing gel filaments;
d) removing at least partly the solvent from the filaments; and
e) drawing the filaments in at least one step before, during and/or after said solvent removing, while applying a draw ratio DR_{solid}. The invention further relates to a spinplate having spinholes of specific geometry used in said process.

Such a process is for example known from the patent publication WO 01/73173 A1. In the experimental part of this publication a process for making high-performance polyethylene (HPPE) multifilament yarn is described comprising the steps of
a) making a solution of 12 mass% of ultra-high molar mass polyethylene homopolymer having an intrinsic viscosity of 18 dl/g in mineral oil;
b) spinning of the solution through a spinplate containing 16 spinholes into an air-gap to form fluid filaments, while applying a draw ratio DR_{fluid} of up to about 34;
c) cooling the fluid filaments in a water quench bath to form solvent-containing gel filaments;
d) removing the solvent from the filaments by extraction with trichlorotrifluoroethane; and
e) drawing the filaments in at least two steps after removing the solvent applying a draw ratio DR_{solid} of from 16 to 66.

A high-performance polyethylene multifilament yarn is herein understood to mean a yarn containing at least 10 filaments made from ultra-high molar mass, or ultra-high molecular weight, polyethylene (UHPE) having an intrinsic viscosity (IV, as measured on solution in decalin at 135°C) of at least about 4 dl/g, the yarn having a tensile strength of at least 3.0 GPa and a tensile modulus of at least 100 GPa (hereinafter also simply referred to as strength or modulus). Such HPPE yarns have a properties profile that make them an interesting material for use in various semi-finished and end-use products, like ropes and cords, mooring lines, fishing nets, sports equipment, medical applications, and ballistic-resistant composites.

Within the context of the present invention a multifilament yarn is understood to be an elongate body comprising a plurality of individual filaments having cross-sectional dimensions much smaller than their length. The filaments are understood to be continuous filaments; that is being of virtually indefinite length. The filaments may have cross-sections of various geometrical or irregular shapes. Filaments within a yarn may be parallel or entangled to one another; the yarn may be linear, twisted or otherwise departed from a linear configuration.

For a commercially viable operation, it is important that a process for making high-performance polyethylene multifilament yarn can be run continuously without interruptions and with high throughput rate, with a high number of filaments in the as-spun yarn. For continuous production of HPPE yarn with constant quality, the process preferably has a relatively wide processing window; that is, yarn quality should preferably be rather forgiving to changes in the conditions.

In WO 01/73173 A1 it is indicated that in the process for making high-performance polyethylene multifilament yarn the draw ratio in and the dimension of the air-gap are critical parameters that determine properties of the filaments and yarn. It is stressed that to obtain a uniform yarn the air-gap should preferably be about 3 mm, and that it is essential the air-gap be kept constant; there should be no perturbation of the surface of the quench bath. A drawback of this known process is that small variations in air-gap draw ratio and dimension will result in process instabilities. More specifically, such variations will result in filaments with varying strength, which may result in overstressing of weaker filaments during subsequent processing steps and thus in filament breakage. This is the more so, since the indicated strength levels are reached if the maximum allowable draw ratio is applied to filaments in the solid state. Breaking of some filaments during production reduces the quality and uniformity of the yarn, for example occurrence of fluffs on the yarn and lowering of yarn tensile properties. If too many filaments break, the process may need to be interrupted and restarted, or even stops in case of yarn breakage.

There is thus a need for a process for making high-performance polyethylene multifilament yarn that shows high processing stability, and that results in multifilament yarn with uniform and high tensile properties.

According to the present invention, this is provided by a process wherein in step b) a fluid draw ratio DR_{fluid} = DRₛₚ x DR_{ag} of at least 50 is applied, wherein DRₛₚ is the draw ratio in the spinholes and DR_{ag} is the draw ratio in the air-gap, with DRₛₚ at least 1 and DR_{ag} greater than 1, and wherein the spinhole has a geometry comprising a contraction zone, with a gradual decrease in diameter from diameter Do to Dₙ with a cone angle in the range 8-75° and wherein the spinhole comprises a zone of constant diameter Dₙ with a length/diameter ratio Lₙ /Dₙ of from 0 to at most 25 downstream of a contraction zone.

The process according to the invention provides improved processing stability over the prior art process and less filament breakage, and thus results in HPPE multifilament yarn of more uniform and improved quality. HPPE yarn of very high strength can be made according to this process without applying the maximum draw ratio in the solid state, which significantly increases the operating window.

Another advantage of the process according to the invention is that the draw ratio DRₛₚ can be set by choosing the geometry of the spinholes, which can be much better controlled than drawing in an air-gap. A further advantage is that the temperature during drawing in the spinholes can be better controlled than in the air-gap. It is known that even small differences in the temperature of a polyethylene solution will strongly affect its rheological properties, and thus its drawing behaviour. Still a further advantage is that a larger air-gap can be applied, which is less critical to small fluctuations, for example resulting from movement of the surface of the quench bath. These advantages become more apparent with increasing number of filaments that are being spun. Preferably, the number of spinholes in the spinplate, and thus the number of filaments in the yarn as spun is therefore at least 50, 100, 150, 200, or even 300.

A spinplate is also called spinneret in the art, and contains a plurality of spinholes, also called orifices, dies, apertures, capillaries or channels. The spinhole has certain geometry in lengthwise and transverse directions, and is preferably of circular cross-section, but also other shapes are possible, depending on the desired form of the filaments to be obtained. In the present application the diameter is meant to be the effective diameter; that is for non-circular or irregularly shaped spinholes the largest distance between an imaginary line connecting the outer boundaries.

Within the context of the present invention, a draw ratio of greater than 1 is applied in a spinhole, if the polyethylene chains in the solution are oriented as a result of an elongational flow field in the spinhole and the orientation so obtained is not subsequently substantially lost as a result of molecular relaxation processes. Such molecular orientation, and thus a draw ratio greater than 1 results if the solution flows through a spinhole having a geometry comprising a contraction zone, that is a zone with a gradual decrease in diameter from diameter Do to Dₙ with a cone angle in the range 8-75°, and wherein the spinhole comprises a zone of constant diameter with

a length/diameter ratio Lₙ /Dₙ of from 0 to at most 25 downstream of a contraction zone. Lₙ is the length of a zone with constant diameter Dₙ.

With cone angle is meant the maximum angle between the tangents of opposite wall surfaces in the contraction zone. For example, for a conical or tapered contraction the angle between the tangents is a constant, i.e. the cone angle; for a so-called trumpet type of contraction zone the angle between the tangents will decrease with decreasing diameter; whereas for a wineglass type of contraction zone the angle between the tangents will pass through a maximum value.

At a cone angle of greater than 75° instabilities like flow turbulence are likely to occur, which would not result in the desired elongational orientation of the molecules. Preferably, the cone angle is at most 60°, at most 50°, more preferably at most 45°. Too small a cone angle is less effective in orienting the polymer molecules, and would result in very long spinholes. Preferably, the cone angle is from at least 10, more preferably at least 12°, or even at least 15°.

The draw ratio in the spinhole is represented by the ratio of the solution flow speeds at the initial diameter or cross-section and the final diameter of the spinhole; which is equivalent to the ratio of the respective cross-sectional areas, or the ratio between the square of the initial and final diameters in case of cylindrical holes, that is DRₛₚ = (D₀/Dₙ)².

Preferably, the draw ratio in the spinholes is at least 2, 5, 10, 15, 25, 40 or even at least 50, because extent and conditions of drawing can be well controlled in the spinholes. In addition, a higher draw ratio in the spinhole, with constant draw ratio in the air-gap, has been found to result in higher tensile strength of the yarn obtained. In a special embodiment, the DRₛₚ is larger than DR_{ag} for the same reason.

The spinhole may further comprise a zone of constant diameter Dₙ downstream of a contraction zone, this zone having a length/diameter ratio Lₙ / Dₙ of at most 25, preferably at most 20, at most 15, 10, or even at most 5. The length of this zone can also be 0; such a zone need to be present in the spinhole. The advantage of this constant diameter zone is a further improved stability of the spinning process, but its length should be limited in order that the molecular orientation introduced in the contraction zone is not substantially lost.

It is noted that in WO 01/73173 A1 a process is disclosed that applies a spinplate with spinholes having a tapered inflow zone with a cone angle of about 90° as deduced from figure 2, and with a downstream zone of constant diameter with a length/diameter ratio UD greater than 10, preferable greater than 25 or 40 (40 and 100 in the examples). According to above definition, the draw ratio in this known spinhole is thus 1.0.

The final diameter of the spinhole may vary, depending on total draw ratio and desired filament thickness. A suitable range is from 0.2 to 5 mm, preferably the final diameter is from 0.3 to 2 mm.

The spinholes may also contain more than one contraction zone, each optionally followed by a zone of constant diameter. In such case similar features relate to each zone as discussed above.

In a special embodiment of the process according to the invention, the spinholes in the spinplate further comprise an inflow zone of constant diameter of at least Do, and of length L₀ with a ratio L₀ / Do of at least 5. The advantage of such zone is that the polymer molecules in the solution can at least partly relax such that pre-orientation originating from upstream flow fields can diminish or disappear. This is especially advantageous in case of a high number of spinholes, requiring complex feed channels that may result in quite different flow histories and degrees of pre-orientation per spinhole. The longer this inflow zone, the more relaxation can occur, therefore, the inflow zone preferably has a L₀ / Do of at least 10, 15, 20, or even 25. It should be noted that the flow speed in this zone is significantly lower than after passing the contraction zone, and for relaxation to occur a relatively small L₀ /Do suffices. Above a certain length, further increase has hardly any effect, but such a long inflow zone would result in very thick spinplates that are more difficult to make and handle. The inflow zone thus preferably has a L₀ / Do of at most 100, or at most 75, or 50. The optimum length depends on factors like molar mass of polyethylene, concentration, and flow speeds.

In a preferred embodiment of the process according to the invention a spinplate comprising at least 10 spinholes, each cylindrical spinhole having a inflow zone of constant diameter Do with L₀ /D₀ at least 10, a contraction zone with cone angle in the range 10-60°, and a downstream zone of constant diameter Dₙ with Lₙ /Dₙ at most 15 is applied, but also any other combination of indicated preferred embodiments is possible.

In the process according to the invention the fluid filaments can be further drawn upon leaving the spinhole, by applying a higher pick-up rate after cooling the filaments, than the flow rate upon leaving the spinhole. This stretching applied before solidification upon cooling is called the draw ratio in the air-gap DR_{ag}, and is in prior art also referred to as draw down. The DR_{ag} can be 1.0 if the pick-up rates equals the flow rate, but the draw ratio is generally optimised in combination with the applied DRₛₚ to reach a certain minimum D_{fluid}. Preferably, the draw ratio in the air-gap is at least 2, 5, or at least 10. The dimension of the air-gap appears not to be very critical, although it is preferably kept constant and the same for all filaments, and can be from some mm to several cm. If the air-gap is too long, molecular relaxation processes may annul part of the orientation obtained. Preferably, the air-gap is of about 5-50 mm length.

The fluid draw ratio DR_{fluid} , being DRₛₚ x DR_{ag}, that is applied to fluid filaments is at least 50, preferably at least 100, 200, or even at least 250. It is found that such a high draw ratio applied to fluid filaments results in improved drawability of the gel and dried filaments (DR_{solid}), and/or in improved tensile strength of the resulting yarn. It is found that a desired level, or even an optimum in tensile strength is obtained already below the maximum in draw ratio that can be applied to filaments in the solid state. Such flexibility in draw ratio that can be applied is synonymous with improved processing stability of the process, since it reduces the chance that a (weaker) filament is over-stressed at the applied draw ratio, and thus reduces frequency of filament breakage. This effect is likely to be related to higher inter filament homogeneity resulting from the improved drawing on fluid filaments in the present process.

The ultra-high molar mass polyethylene applied in the process according to the invention has an intrinsic viscosity (IV, as measured on solution in decalin at 135°C) of between at least 4 dl/g, preferably between 5 and 40, between 8 and 35, or 10 and 30, more preferably between 15 and 25 dl/g. Intrinsic viscosity is a measure for molar mass (also called molecular weight) that can more easily be determined than actual molar mass parameters like Mₙ and M_{w}. There are several empirical relations between IV and M_{w}, but such relation is highly dependent on molar mass distribution. Based on the equation M_{w} = 5.37 x 10⁴ [IV]^{1.37} (see EP 0504954 A1) an IV of 4 or 8 dl/g would be equivalent to M_{w} of about 360 or 930 kg/mol, respectively. Preferably, the UHPE is a linear polyethylene with less than one side chain per 100 carbon atoms, and preferably less than one side chain per 300 carbon atoms, a side chain or branch usually containing at least 10 carbon atoms. The linear polyethylene may further contain up to 5 mol% of one or more comonomers, such as alkenes like propylene, butene, pentene, 4-methylpentene or octene.

In a preferred embodiment, the UHPE contains a small amount of relatively small groups as side chains, preferably a C1-C4 alkyl group. It is found that a certain amount of such groups results in yarns having improved creep behaviour. Too large a side chain, or too high an amount of side chains, however, negatively affects the processing and especially the drawing behaviour of the filaments. For this reason, the UHPE preferably contains methyl or ethyl side chains, more preferably methyl side chains. The amount of such side chains is preferably at most 20, more preferably at most 10 per 1000 carbon atoms.

The UHPE that is applied in the process according to the invention may further contain small amounts, generally less than 5 mass% of customary additives, such as anti-oxidants, thermal stabilizers, colorants, flow promoters, etc. The UHPE can be a single polymer grade, but also a mixture of two or more different grades, e.g. differing in IV or molar mass distribution, and/or number of side chains.

In the process according to the invention any of the known solvents suitable for gel spinning of UHPE can be used, for example paraffin wax, paraffin oil or mineral oil, kerosene or decalin. It is found that the present process is especially advantageous for relatively volatile solvents, like decalin and several kerosene grades.

The solution of UHPE in solvent can be made using known methods. Preferably, a twin-screw extruder is applied to make a homogeneous solution from a UHPE/solvent slurry. The solution is preferably fed to the spinplate at constant flow rate with metering pumps. The concentration of the UHPE solution can vary between wide limits, a suitable range is between 3 and 25 mass%, with a lower concentration being preferred the higher the molar mass of the polyethylene is. Preferably, the concentration is between 3 and 15 mass% for UHPE with IV in the range 15-25 dl/g.

The UHPE solution is preferably of substantially constant composition over time, because this further improves processing stability and results in yarn of more constant quality over time. With substantially constant composition it is meant that parameters like UHPE chemical composition and molar mass, concentration of UHPE in the solution, and chemical composition of the solvent vary within a certain range around a chosen value.

Cooling of the fluid filaments into solvent-containing gel filaments may be performed with a gas flow, or by quenching the filament in a liquid cooling bath after passing an air-gap, the bath preferably containing a non-solvent for the UHPE solution.. If gas cooling is applied, the air-gap is the length in air before the filaments are solidified. Preferably a liquid quench-bath is applied in combination with an air-gap, the advantage being that drawing conditions are better defined and controlled than by gas cooling. Although called air-gap, the atmosphere can be different than air; e.g. as a result of a flow of an inert gas like nitrogen, or as a result of solvent evaporating from filaments. Preferable, there is no forced gas flow, or only of low flow rate.

In a preferred embodiment, the filaments are quenched in a bath containing a cooling liquid, which liquid is not miscible with the solvent and which flows along the filaments at least at the location where the fluid filaments enter the quench bath. This way solvent exuding from the filaments, that may cause sticking together of filaments in subsequent steps, can be removed.

Solvent removal from gel filaments can be performed by known methods, for example by evaporating a relatively volatile solvent, by using an extraction liquid, or by a combination of both methods.

The process for making a polyethylene yarn according to the invention further comprises, in addition to drawing the solution filaments, drawing the filaments in at least one drawing step performed on the semi-solid or gel filaments and/or on solid filaments after cooling and at least partial removal of solvent. Typically, a draw ratio of at least 4 is applied. Preferably, drawing is performed in more than two steps, and preferably at different temperatures with an increasing profile between about 120 and 155°C. A 3-step draw ratio applied on (semi-) solid filaments is represented as DR_{solid} = DR_{solid 1} x DR_{solid 2} x DR_{solid 3} ; i.e. it is composed of the draw ratios applied in each drawing step.

It is found that a draw ratio DR_{solid} of upto about 35 can be applied, depending on the applied DR_{fluid}, to result in yarn having high tensile properties. As a result of improved drawability of the filaments in the process according to the invention, a draw ratio below the maximum draw ratio, preferably in the range 10-30, is applied to obtain a multifilament HPPE yarn showing maximum tensile strength; with very low risk of filament breakage occurring. In the known processes, maxiumum tensile properties are generally obtained by applying the maximum draw ratio. The processing window of the present process is thus significantly wider than for a state-of-the-art process.

In a special embodiment according to the invention, a 3-15 mass% solution of linear UHPE of IV 15-25 dl/g is spun through a spinplate containing at least 10 spinholes into an air-gap, the spinholes comprising at least one contraction zone with a cone angle in the range 10-60° and comprising a zone of constant diameter Dₙ with a length/diameter ratio Lₙ / Dₙ smaller than 10 downstream of the contraction zone, while applying a fluid draw ratio DR_{fluid} = DRₛₚ x DR_{ag} of at least 100 and a draw ratio DR_{solid} of between 10 and 30; but also other combinations of said parameter settings provide good results.

The invention further relates to a spinplate suitable for making high-performance polyethylene multifilament yarn, comprising at least 10 spinholes of geometry, and preferred features as defined and described above. The smallest diameter of the spinholes in the spinplate according to the invention may vary, depending on processing conditions like desired total draw ratio and desired yarn properties, like filament thickness. A suitable range is from 0.2 to 5 mm, preferably the smallest diameter is from 0.3 to 2 mm. The advantage of said spinplate is that, when applied in a process for making high-performance polyethylene multifilament yarn it enables a high degree of drawing on fluid filaments and a stable spinning process with a wider processing window; both in the spinning of fluid filaments as during drawing of (semi-) solid filaments, resulting in yarn of high strength and with high consistency in properties between individual filaments.

The HPPE yarn obtained with the process according to the invention is very useful for making various semi-finished and end-use articles for different applications, like various ropes and cords, fishing nets, sports equipment, medical applications, and ballistic-resistant composites. Ropes especially include heavy-duty ropes for application in marine and offshore operations, like anchor handling, seismic operations, mooring of drilling rigs and production platforms, and towing. Ballistic-resistant composites can be based on woven or non-woven fabrics made from HPPE yarn, an example of non-woven fabric is a sheet material containing layers of unidirectionally oriented filaments.

The invention is further elucidated by the following example and comparative experiments.

### Methods

- IV: the Intrinsic Viscosity is determined according to method PTC-179 (Hercules Inc. Rev. Apr. 29, 1982) at 135°C in decalin, the dissolution time being 16 hours, with DBPC as anti-oxidant in an amount of 2 g/l solution, by extrapolating the viscosity as measured at different concentrations to zero concentration;
- Side chains: the number of side chains in a UHMWPE sample is determined by FTIR on a 2 mm thick compression moulded film, by quantifying the absorption at 1375 cm⁻¹ using a calibration curve based on NMR measurements (as in e.g. EP 0269151);
- Tensile properties: tensile strength (or strength), tensile modulus (or modulus) and elongation at break are defined and determined on multifilament yarns as specified in ASTM D885M, using a nominal gauge length of the fibre of 500 mm, a crosshead speed of 50%/min and Instron 2714 clamps. On the basis of the measured stress-strain curve the modulus is determined as the gradient between 0.3 and 1 % strain. For calculation of the modulus and strength, the tensile forces measured are divided by the titre, as determined by weighing 10 metres of fibre; values in GPa are calculated assuming a density of 0.97 g/cm³.

### Example 1

A 9 mass% solution of a UHPE polymer having less than 0.3 side groups per 1000 per carbon atoms and an IV of 19.8 dl/g in decalin, containing a ratio of cis/trans isomers of between 38/62 and 42/58, was made, and extruded with a 40 mm twin screw extruder equipped with a gear-pump at a temperature setting of 180°C through a spinplate having 390 spinholes into an air-gap with a rate of 2.2 g/min per hole. The spinholes had an initial cylindrical channel of 3.0 mm diameter and UD of 18, followed by a conical contraction with cone angle 60° into a cylindrical channel of 1.0 mm diameter and UD of 10. The solution filaments were cooled in a water bath kept at about 40°C and with a water flow rate of about 5 cm/s perpendicular to the filaments entering the bath, and taken-up at such rate that a draw ratio of 12 was applied to the as-spun filaments in the air-gap of 20 mm. The applied draw ratio DR_{fluid} = DRₛₚ x DR_{ag} =9x12=108.

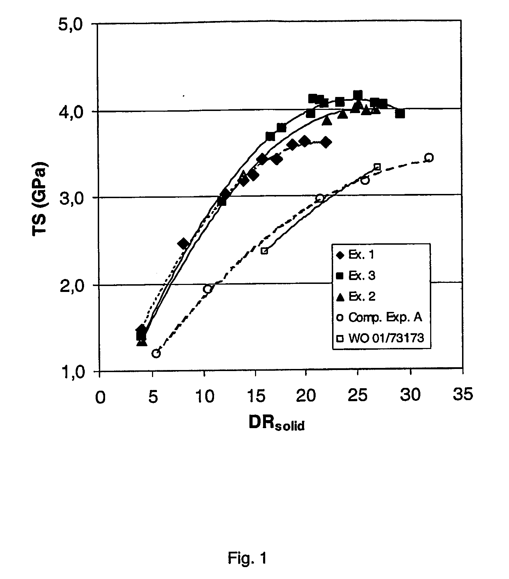

The filaments subsequently were drawn in the (semi-) solid-state drawing in two steps, first with a temperature gradient of at about 110-140°C and than at about 151°C; during which process the decalin evaporated from the filaments. The draw ratio DR_{soild} was increased stepwise in a number of consecutive experiments; until the process lacked the stability to run without interruptions due to yarn breakage during 2 hours. Relevant data on draw ratio and tensile properties of the yarns obtained is shown in Table 1. The results are also depicted in Figure 1.

### Comparative experiment A

In this series of experiments, that was otherwise similar to Ex. 1, the draw ratio in the air-gap of 15 mm was lowered to 4.4, resulting in a DR_{fluid} of 40. The measured tensile strength for the corresponding DR_{solid} as in Ex. 1 was significantly lower; and showed no levelling of or plateau value. Highest tensile properties were obtained for the most critical processing conditions, as can be seen from data in Table 1 and Figure 1.

### Example 2

These experiments were performed analogously to the foregoing, with following modifications: the spinplate had 390 holes with an inflow channel of diameter 3.5 mm and UD = 18, a contraction zone with cone angle 60°, and subsequent channel of diameter 1.0 mm and UD of 10, resulting in a DRₛₚ of 12.25; the draw ratio in the air-gap of 40 mm was 22.6. The solution spin rate was 1.7 g/min per hole. Yarn with a tensile strength of about 4 GPa could be made with solid state draw ratio in the range of about 23-27 in a stable process.

### Example 3

Analogously to above experiments, multifilaments yarns were spun at spin rate 2.2 g/min per spinhole from a decalin solution containing 8 mass% of UHPE of IV 19.8 dl/g, using a 130 mm twin-screw extruder equipped with a gear-pump, through spinplates containing 588 spinholes having an inflow zone of diameter 3,5 mm and UD of 18, a conical contraction zone with cone angle 60°, and subsequent capillary with diameter 0.8 mm and UD 10. The draw ratio in the spinholes was thus 19.1; the draw ratio in the air-gap was 16.2. Water flow rate in the cooling bath was about 6 cm/s. The tensile properties of the yarns as function of the applied draw ratio on solid filaments are given in Table 1 and Figure 1. Very stable production of yarn of about 4.1 GPa strength was possible with DR_{solid} in the range 20-39.

For comparison, two data points from WO 01/73173 have been included in Figure 1; Comp. Ex. K and Ex. 1 were made with DR_{fluid} = DR_{ag} = 6 and DR_{solid} 16 and 27, respectively; with other conditions being constant.

**Table 1.**

| | ***DR_{solid 1}*** | ***DR_{solid 2}*** | ***DR_{solid}*** | ***Tenacity*** | ***TS*** | ***Modulus*** | ***Elongation at break*** |
|---|---|---|---|---|---|---|---|
| | | | | *(cN*/*dtex)* | *(GPa)* | *(GPa)* | *(%)* |
| **Ex.1** (DR_{fluid} = 108) | | | | | | | |
| | 4 | 1,0 | 4,0 | 15,2 | 1,47 | | |
| | 4 | 2,0 | 8,1 | 25,4 | 2,46 | 38 | 4,83 |
| | 4 | 3,1 | 12,3 | 31,2 | 3,03 | 81 | 3,81 |
| | 4 | 3,5 | 14,0 | 32,8 | 3,18 | 90 | 3,64 |
| | 4 | 3,7 | 14,9 | 33,4 | 3,24 | 99 | 3,41 |
| | 4 | 4,0 | 15,9 | 35,3 | 3,42 | 110 | 3,27 |
| | 4 | 4,3 | 17,2 | 35,2 | 3,41 | 117 | 3,24 |
| | 4 | 4,7 | 18,8 | 37,0 | 3,59 | 123 | 3,24 |
| | 4 | 5,0 | 20,0 | 37,4 | 3,63 | 129 | 3,20 |
| | 4 | 5,5 | 22,0 | 37,2 | 3,61 | 138 | 3,03 |

| **Ex. 2** (DR_{fluid} = 277) | | | | | | | |
|---|---|---|---|---|---|---|---|
| | 4 | 1,0 | 4,0 | 13,8 | 1,34 | 30 | 8,45 |
| | 4 | 3,5 | 14,0 | 33,4 | 3,24 | 78 | 3,91 |
| | 4 | 5,5 | 22,1 | 39,9 | 3,87 | 122 | 3,21 |
| | 4 | 5,9 | 23,6 | 40,7 | 3,95 | 125 | 3,09 |
| | 4 | 6,2 | 24,9 | 41,3 | 4,01 | 128 | 3,08 |
| | 4 | 6,3 | 25,2 | 41,8 | 4,05 | 130 | 2,94 |
| | 4 | 6,5 | 26,0 | 41,0 | 3,98 | 132 | 3,01 |
| | 4 | 6,7 | 26,8 | 41,2 | 4,00 | 133 | 2,98 |

| **Ex. 3** (DR_{fluid} = 309) | | | | | | | |
|---|---|---|---|---|---|---|---|
| | 4 | 1,0 | 4,0 | 14,4 | 1,40 | 25 | 8,05 |
| | 4 | 3,0 | 11,9 | 30,3 | 2,94 | 94 | 3,48 |
| | 4 | 4,2 | 16,6 | 37,9 | 3,68 | 130 | 3,32 |
| | 4 | 4,4 | 17,8 | 39,0 | 3,78 | 136 | 3,27 |
| | 4 | 5,1 | 20,6 | 40,7 | 3,95 | 154 | 3,29 |
| | 4 | 5,2 | 20,8 | 42,3 | 4,10 | 154 | 3,21 |
| | 4 | 5,4 | 21,4 | 42,2 | 4,09 | 154 | 3,18 |
| | 4 | 5,5 | 21,9 | 41,8 | 4,05 | 157 | 3,10 |
| | 4 | 5,9 | 23,4 | 42,0 | 4,07 | 164 | 3,04 |
| | 4 | 6,3 | 25,2 | 42,8 | 4,15 | 165 | 3,05 |
| | 4 | 6,7 | 26,8 | 41,8 | 4,05 | 168 | 3,00 |
| | 4 | 6,9 | 27,6 | 41,7 | 4,04 | 171 | 2,97 |
| | 4 | 7,3 | 29,2 | 40,5 | 3,93 | 173 | 3,01 |

| **Comp. Exp. A** (DR_{fluid} = 40 | | | | | | | |
|---|---|---|---|---|---|---|---|
| | 5,5 | 1 | 5,5 | 12,3 | 1,19 | 20 | 9,04 |
| | 5,5 | 1,9 | 10,5 | 19,9 | 1,93 | 45 | 4,21 |
| | 5,5 | 3,9 | 21,5 | 30,5 | 2,96 | 94 | 3,64 |
| | 5,5 | 4,7 | 25,9 | 32,7 | 3,17 | 113 | 3,25 |
| | 5,5 | 5,8 | 31,9 | 35,2 | 3,41 | 137 | 2,89 |

## Claims

1. Process for making high-performance polyethylene multifilament yarn comprising the steps of
a) making a solution of ultra-high molar mass polyethylene in a solvent;
b) spinning of the solution through a spinplate containing a plurality of spinholes into an air-gap to form fluid filaments, while applying a draw ratio DR_{fluid};
c) cooling the fluid filaments to form solvent-containing gel filaments;
d) removing at least partly the solvent from the filaments; and
e) drawing the filaments in at least one step before, during and/or after said solvent removing, while applying a draw ratio DR_{solid},
**characterized in that** in step b) a fluid draw ratio DR_{fluid} = DRₛₚ x DR_{ag} of at least 50 is applied, wherein DRₛₚ is the draw ratio in the spinholes and DR_{ag} is the draw ratio in the air-gap, with DRₛₚ greater than 1 and DR_{ag} at least 1, and wherein the spinhole has a geometry comprising a contraction zone, with a gradual decrease in diameter from diameter Do to Dₙ with a cone angle in the range 8-75° and wherein the spinhole comprises a zone of constant diameter Dₙ with a length/diameter ratio Lₙ /Dₙ of from 0 to at most 25 downstream of a contraction zone.

2. Process according to claim 1, wherein the spinplate contains at least 100 spinholes.

3. Process according to any one of claims 1-2, wherein the cone angle is from 10 to 60°.

4. Process according to any one of claims 1-3, wherein the draw ratio in the spinholes is at least 5.

5. Process according to claim 4, wherein the draw ratio in the spinholes is at least 10.

6. Process according to any one of claims 1-5, wherein the spinhole further comprises a zone of constant diameter Dₙ downstream of a contraction zone, this zone having a length/diameter ratio Lₙ /Dₙ of at most 20.

7. Process according to claim 6, wherein the ratio Lₙ / Dₙ is at most 15.

8. Process according to any one of claims 1-7 wherein the spinhole further comprises an inflow zone of constant diameter of at least Do and a length of Lo, with a ratio Lo / Do of at least 5.

9. Process according to claim 8, wherein the ratio L₀ / D₀ is at least 10.

10. Process according to any one of claims 1-9, wherein a spinplate comprising at least 10 spinholes, each cylindrical spinhole having a inflow zone of constant diameter Do with Lo /Do at least 10, a contraction zone with cone angle in the range 10-60°, and a downstream zone of constant diameter Dₙ with Lₙ /Dₙ at most 15 is applied.

11. Process according to any one of claims 1-10, wherein the fluid draw ratio DR_{fluid} applied to fluid filaments is at least 100.

12. Process according to any one of claims 1-11, wherein a 3-15 mass% solution of linear UHPE of IV 15-25 dl/g is spun through a spinplate containing at least 10 spinholes into an air-gap, the spinholes comprising a contraction zone with a cone angle in the range 10-60° and comprising a zone of constant diameter Dₙ With a length/diameter ratio Lₙ / Dₙ smaller than 10 downstream of a contraction zone, while applying a fluid draw ratio DR_{fluid} = DRₛₚ x DR_{ag} of at least 100 and a draw ratio DR_{solid} of between 10 and 30.

13. Spinplate comprising at least 10 spinholes of a geometry comprising a contraction zone, with a gradual decrease in diameter from diameter Do to Dₙ with a cone angle in the range 8-75°, a zone of constant diameter Dₙ with a length/diameter ratio Lₙ /Dₙ of from 0 to at most 25 downstream of the contraction zone and an inflow zone of constant diameter of at least Do and a length of L₀, with a ratio L₀ / Do of at least 5 .

14. Spinplate according to claim 13 containing at least 100 spinholes.

## Patentansprüche

1. Verfahren zur Herstellung von Hochleistungspolyethylenmultifilamentgarn, bei dem man
a) in einem Lösungsmittel eine Lösung von ultrahochmolekularem Polyethylen herstellt,
b) die Lösung über eine Spinnplatte mit mehreren Spinnlöchern in einen Luftspalt unter Anwendung eines Streckverhältnisses flüssig DR_{flüssig} zu Flüssigfilamenten verspinnt,
c) die Flüssigfilamente zu lösungsmittelhaltigen Gelfilamenten abkühlt,
d) aus den Filamenten das Lösungsmittel zumindest zum Teil entfernt und
e) die Filamente vor, während und/oder nach der Lösungsmittelentfernung unter Anwendung eines Streckverhältnisses DR_{fest}, in mindestens einem Schritt verstreckt,
**dadurch gekennzeichnet, dass** in Schritt b) ein Streckverhältnis flüssig DR_{flüssig} = DRₛₚ x DR_{ag} von mindestens 50 zur Anwendung kommt, wobei es sich bei DRₛₚ um das Streckverhältnis in den Spinnlöchern und bei DR_{ag} um das Streckverhältnis im Luftspalt handelt, wobei DRₛₚ bei größer 1 und DR_{ag} bei mindestens 1 liegt, und wobei das Spinnloch eine Geometrie aufweist, die eine Kontraktionszone mit einer allmählichen Durchmesserreduzierung von D₀ auf Dₙ mit einem Konuswinkel im Bereich 8-75° umfasst, und wobei das Spinnloch nach einer Kontraktionszone eine Zone konstanten Durchmessers Dₙ mit einem Länge/Durchmesser-Verhältnis Lₙ/Dₙ von 0 bis höchstens 25 umfasst.

2. Verfahren nach Anspruch 1, bei dem die Spinnplatte mindestens 100 Spinnlöcher enthält.

3. Verfahren nach einem der Ansprüche 1-2, bei dem der Konuswinkel bei 10 bis 60° liegt.

4. Verfahren nach einem der Ansprüche 1-3, bei dem das Streckverhältnis in den Spinnlöchern mindestens 5 beträgt.

5. Verfahren nach Anspruch 4, bei dem das Streckverhältnis in den Spinnlöchern mindestens 10 beträgt.

6. Verfahren nach einem der Ansprüche 1-5, bei dem das Spinnloch nach einer Kontraktionszone ferner eine Zone konstanten Durchmessers Dₙ umfasst, wobei diese Zone über ein Länge/Durchmesser-Verhältnis Lₙ/Dₙ von höchstens 20 verfügt.

7. Verfahren nach Anspruch 6, bei dem das Verhältnis Lₙ/Dₙ höchstens 15 beträgt.

8. Verfahren nach einem der Ansprüche 1-7, bei dem das Spinnloch ferner eine Einströmzone konstanten Durchmessers von mindestens D₀ und einer Länge L₀ mit einem Verhältnis L₀/D₀ von mindestens 5 umfasst.

9. Verfahren nach Anspruch 8, bei dem das Verhältnis L₀/D₀ mindestens 10 beträgt.

10. Verfahren nach einem der Ansprüche 1-9, bei dem eine Spinnplatte, umfassend mindestens 10 Spinnlöcher, wobei jedes zylindrische Spinnloch eine Einströmzone konstanten Durchmessers D₀ mit L₀/D₀ gleich mindestens 10, eine Kontraktionszone mit Konuswinkel im Bereich 10-60° und eine nachgeordneten Zone konstanten Durchmessers Dₙ mit Lₙ/Dₙ gleich höchstens 15 umfasst, zur Anwendung kommt.

11. Verfahren nach einem der Ansprüche 1-10, bei dem das auf Flüssigfilamente angewendete Streckverhältnis flüssig DR_{flüssig} mindestens 100 beträgt.

12. Verfahren nach einem der Ansprüche 1-11, bei dem man eine 3-15 gew.-%ige Lösung von linearem UHPE mit IV 15-25 dl/g über eine Spinnplatte mit mindestens 10 Spinnlöchern in einen Luftspalt verspinnt, wobei die Spinnlöcher eine Kontraktionszone mit einem Konuswinkel im Bereich 10-60° und eine danach angeordnete Zone konstanten Durchmessers Dₙ mit einem Länge/DurchmesserVerhältnis L_{n/}Dₙ kleiner 10 umfassen, wobei ein Streckverhältnis flüssig DR_{flüssig} = DRₛₚ x DR_{ag} von mindestens 100 und ein Streckverhältnis DR_{fest} zwischen 10 und 30 zur Anwendung kommen.

13. Spinnplatte, umfassend mindestens 10 Spinnlöcher mit einer Geometrie, umfassend eine Kontraktionszone mit einer allmählichen Durchmesserreduzierung von D₀ auf Dₙ mit einem Konuswinkel im Bereich 8-75°, eine Zone konstanten Durchmessers Dₙ mit einem Länge/DurchmesserVerhältnis Lₙ/Dₙ von 0 bis höchstens 25 nach der Kontraktionszone und eine Einströmzone konstanten Durchmessers von mindestens D₀ und einer Länge von L₀ mit einem Verhältnis L₀/D₀ von mindestens 5.

14. Spinnplatte nach Anspruch 13, enthaltend mindestens 100 Spinnlöcher.

## Revendications

1. Procédé de fabrication d'un fil multifilament haute performance en polyéthylène, consistant à :
a) préparer une solution de polyéthylène à ultra-haute masse molaire dans un solvant ;
b) filer la solution en la faisant passer à travers une plaque de filage contenant une pluralité d'orifices de filage, ladite solution arrivant dans un intervalle d'air, pour former des filaments fluides, tout en appliquant un rapport d'étirage RE_{fluide} ;
c) refroidir les filaments fluides pour former des filaments de gel contenant un solvant ;
d) éliminer au moins en partie le solvant des filaments ; et
e) étirer les filaments en au moins une étape avant, pendant et/ou après ladite élimination du solvant, en appliquant un rapport d'étirage RE_{solide} ;
**caractérisé en ce que** dans l'étape b), un rapport d'étirage dans l'état fluide RE_{fluide} = REₒₑ x REᵢₐ d'au moins 50 est appliqué, REₒₑ étant le rapport d'étirage dans les orifices de filage et REᵢₐ étant le rapport d'étirage dans l'intervalle d'air, REₒₑ étant supérieur à 1 et REᵢₐ étant d'au moins 1, l'orifice de filage ayant une géométrie comprenant une zone de contraction, avec une diminution progressive du diamètre du diamètre D₀ au diamètre Dₙ avec un angle de cône de 8-75 °, et l'orifice de filage comprenant une zone de diamètre constant Dₙ, avec un rapport longueur/diamètre Lₙ/Dₙ de 0 à 25 au maximum en aval d'une zone de contraction.

2. Procédé selon la revendication 1, dans lequel la plaque de filage contient au moins 100 orifices de filage.

3. Procédé selon l'une quelconque des revendications 1-2, dans lequel l'angle de cône est de 10-60 °.

4. Procédé selon l'une quelconque des revendications 1-3, dans lequel le rapport d'étirage dans les orifices de filage est d'au moins 5.

5. Procédé selon la revendication 4, dans lequel le rapport d'étirage dans les orifices de filage est d'au moins 10.

6. Procédé selon l'une quelconque des revendications 1-5, dans lequel l'orifice de filage comprend en outre une zone de diamètre constant Dₙ en aval d'une zone de contraction, cette zone ayant un rapport longueur/diamètre Lₙ/Dₙ de 20 au maximum.

7. Procédé selon la revendication 6, dans lequel le rapport Lₙ/Dₙ est de 15 au maximum.

8. Procédé selon l'une quelconque des revendications 1-7, dans lequel l'orifice de filage comprend en outre une zone d'entrée d'écoulement de diamètre constant d'au moins D₀ et ayant une longueur L₀, avec un rapport L₀/D₀ d'au moins 5.

9. Procédé selon la revendication 8, dans lequel le rapport L₀/D₀ est d'au moins 10.

10. Procédé selon l'une quelconque des revendications 1-9, dans lequel une plaque de filage comprenant au moins 10 orifices de filage, chaque orifice de filage cylindrique comprenant une zone d'entrée d'écoulement de diamètre constant D₀, avec un rapport L₀/D₀ d'au moins 10, une zone de contraction avec un angle de cône de 10-60 °, et en aval une zone de diamètre constant Dₙ, un rapport Lₙ/Dₙ de 15 au maximum étant appliqué.

11. Procédé selon l'une quelconque des revendications 1-10, dans lequel le rapport d'étirage dans l'état fluide RE_{fluide} appliqué aux filaments fluides est d'au moins 100.

12. Procédé selon l'une quelconque des revendications 1-11, dans lequel une solution contenant un pourcentage massique de 3-15 % d'UHPE linéaire et ayant une viscosité intrinsèque de 15-25 dl/g est filée par passage à travers une plaque de filage contenant au moins 10 orifices de filage, ladite solution arrivant dans un intervalle d'air, les orifices de filage comprenant une zone de contraction avec un angle de cône de 10-60 ° et comprenant une zone de diamètre constant Dₙ, avec un rapport longueur/diamètre Lₙ/Dₙ inférieur à 10 en aval d'une zone de contraction, en appliquant un rapport d'étirage dans l'état fluide RE_{fluide} = REₒₑ x REᵢₐ d'au moins 100 et un rapport d'étirage RE_{solide} de 10 à 30.

13. Plaque de filage comprenant au moins 10 orifices de filage ayant une géométrie comprenant une zone de contraction, avec une diminution progressive du diamètre du diamètre D₀ au diamètre Dₙ avec un angle de cône de 8-75 °, une zone de diamètre constant Dₙ, avec un rapport longueur/diamètre Lₙ/Dₙ de 0 à 25 au maximum en aval de la zone de contraction, et une zone d'entrée d'écoulement de diamètre constant d'au moins D₀ et ayant une longueur L₀, avec un rapport L₀/D₀ d'au moins 5.

14. Plaque de filage selon la revendication 13, contenant au moins 100 orifices de filage.
